Europäisches Patentamt

European Patent Office

Office européen des brevets

(19)

(11) Numéro de publication : **0 151 070**
**B1**

(12)

# FASCICULE DE BREVET EUROPÉEN

(45) Date de publication du fascicule du brevet :
**13.04.88**

(51) Int. Cl.⁴ : **F 16 D 65/56**

(21) Numéro de dépôt : **85400109.6**

(22) Date de dépôt : **23.01.85**

(54) **Moteur de frein à réglage automatique.**

(30) Priorité : **31.01.84 FR 8401438**

(43) Date de publication de la demande :
**07.08.85 Bulletin 85/32**

(45) Mention de la délivrance du brevet :
**13.04.88 Bulletin 88/15**

(84) Etats contractants désignés :
**DE FR GB IT NL SE**

(56) Documents cités :
**EP-A- 0 008 452**
**EP-A- 0 036 568**
**FR-A- 1 317 919**
**FR-A- 2 119 759**
**FR-A- 2 238 866**

(73) Titulaire : **BENDIX France**
**126, rue de Stalingrad**
**F-93700 Drancy (FR)**

(72) Inventeur : **Pressaco, Pierre**
**45, rue Emile Zola Bâtiment C**
**F-93120 La Courneuve (FR)**
Inventeur : **Sauvee, Jean-Paul**
**76, Boulevard Félix Faure**
**F-93300 Aubervilliers (FR)**

(74) Mandataire : **Timoney, Ian Charles Craig et al**
**Division Technique Service Brevets Bendix Europe**
**126, rue de Stalingrad**
**F-93700 Drancy (FR)**

EP 0 151 070 B1

Jouve, 18, rue St-Denis, 75001 Paris, France

## Description

L'invention se rapporte à un moteur de frein susceptible de mettre en œuvre un frein notamment destiné à équiper un véhicule automobile.

L'invention concerne en particulier un moteur de frein à réglage automatique destiné à compenser automatiquement l'usure des garnitures de friction afin de maintenir la course de la commande mécanique et/ou de la pédale de frein à un niveau sensiblement constant et faible.

On connaît de nombreux moteurs de frein équipés de dispositif à réglage automatique, par exemple celui décrit dans le brevet français n° 1 317 919. Dans ce moteur de frein, le réglage automatique comporte un système à vis-écrou à pas réversible, l'écrou étant libre de tourner pour suivre les mouvements du piston, l'écrou étant bloqué pour le mouvement inverse grâce à un ressort d'embrayage à friction placé entre le piston et l'écrou. Cette disposition permet de transmettre un effort axial entre une pièce de commande et le piston de travail au travers de ce dispositif de blocage formé par le ressort d'embrayage. On notera que le réglage automatique est mis en œuvre lorsque le piston de travail est sollicité hydrauliquement, le réglage automatique étant hors-service lors de l'actionnement mécanique car dans ce cas la vis et l'écrou se déplacent simultanément et ne peuvent mettre en œuvre le réglage automatique. Produit à des millions d'exemplaires, ce dispositif donne entière satisfaction et il est très fiable. Néanmoins le réglage automatique est mis en œuvre par le mouvement relatif du piston de travail et de la vis à pas réversible, c'est-à-dire que si le jeu entre le piston et les éléments de friction est important on peut être amené à actionner plusieurs fois la pédale, le maître-cylindre du véhicule étant dans l'impossibilité de fournir au moteur de frein tout le volume de liquide nécessaire pour déplacer le piston entre une position complètement rétractée et une deuxième position de travail en coopération avec les éléments de friction. Ce phénomène est parfaitement connu, que le frein soit équipé ou non de réglage automatique, il est nécessaire après tout changement des éléments de friction de « pomper » au moyen de la pédale de frein jusqu'à retrouver une sensation pédale correcte. On notera également que si la précaution précédente n'est pas prise, la commande mécanique peut être inopérante par manque de course par exemple au levier.

Il a également été proposé notamment dans le brevet FR-A-2 119 759 un moteur de frein à réglage automatique du type comprenant un système vis-écrou à pas réversible placé entre un piston de travail et une pièce de commande susceptible de transmettre un effort axial de ladite pièce de commande audit piston de travail lorsque la rotation relative entre vis et écrou du système vis-écrou est bloquée par un dispositif de blocage, un dispositif automatique de positionnement axial relatif entre ladite pièce de commande et ledit piston de travail assurant une course d'approche prédéterminée entre ledit piston de travail et un élément de friction susceptible d'être sollicité par le moteur de frein, ledit dispositif de positionnement étant mis en œuvre par des moyens internes déplaçant axialement ledit piston de travail par rapport à ladite pièce de commande après une course initiale prédéterminée de ladite pièce de commande, les moyens internes ayant mis hors service ledit dispositif de blocage si la course d'approche est supérieure à la course d'approche prédéterminée. Dans un tel moteur de frein, le dispositif de positionnement est du type comportant un ressort de régleur monté dans un système de transmission de force placé entre le piston de travail et la pièce de commande. La mise en œuvre du positionnement axial du piston de travail et de la pièce de commande dépend entre autres de la force de tarage du ressort de régleur. Cette force de tarage, qui n'est pas d'un réglage aisé lors du montage du ressort, peut également varier au cours de l'utilisation du moteur de frein. Ceci nuit à la fiabilité du moteur de frein lui-même.

L'invention propose donc un moteur de frein à réglage automatique de construction simple et fiable avec ou sans commande hydraulique.

Dans ce but, l'invention propose un moteur de frein à réglage automatique du type comprenant un système vis-écrou à pas réversible placé entre un piston de travail et une pièce de commande susceptible de transmettre un effort axial de ladite pièce de commande audit piston de travail lorsque la rotation relative entre vis et écrou du système vis-écrou est bloquée par un dispositif de blocage, un dispositif automatique de positionnement axial relatif entre ladite pièce de commande et ledit piston de travail assurant une course d'approche prédéterminée entre ledit piston de travail et un élément de friction susceptible d'être sollicité par le moteur de frein, ledit dispositif de positionnement étant mis en œuvre par des moyens internes déplaçant axialement ledit piston de travail par rapport à ladite pièce de commande après une course initiale prédéterminée de ladite pièce de commande, les moyens internes ayant mis hors service ledit dispositif de blocage si la course d'approche est supérieure à la course d'approche prédéterminée, caractérisé en ce que le dispositif de positionnement comporte un deuxième dispositif de blocage dudit dispositif de positionnement interdisant la mise en œuvre de celui-ci pour toute course de la pièce de commande inférieure à ladite course initiale prédéterminée.

Il apparaît que grâce à ces caractéristiques la mise en œuvre du dispositif de positionnement axial est contrôlée, d'une façon fiable, à partir des seuls déplacements relatifs de divers éléments du moteur de frein, évitant tout recours à un système de transmission de force de type à ressort. De plus quelle que soit la course d'approche entre le piston de travail et les éléments de friction, le dispositif automatique de positionnement axial relatif permet de rattraper les jeux entre piston de travail et élément de friction sans obligation de « pomper » et la commande mécanique est opérante immédiatement quelle que soit la distance initiale entre le piston de travail et l'élément de friction à solliciter.

On décrira maintenant à titre d'exemple non limitatif trois modes de réalisation de l'invention en se référant aux dessins annexés dans lesquels :

La figure 1 est une vue partielle en coupe d'un moteur de frein réalisé conformément à l'invention ;

La figure 2 est une vue similaire à la figure 1 d'un deuxième mode de réalisation ;

La figure 3 est une vue en coupe des moteurs de frein des figures 1 et 2 selon les lignes 3-3 de ces figures ;

La figure 4 est une vue partielle en coupe d'un troisième mode de réalisation à commande hydraulique ; et

La figure 5 est une vue agrandie éclatée en perspective d'éléments du troisième mode de réalisation.

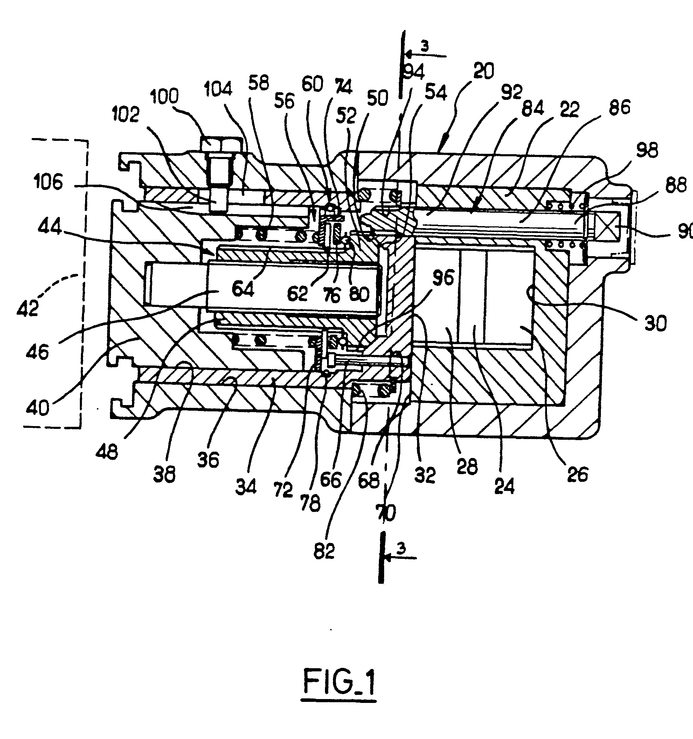

Le moteur de frein représenté sur la figure 1 est du type à commande à coin utilisé en particulier dans les freins à disque poids lourds. Ce moteur de frein comporte, d'une façon conventionnelle, un corps 20 dans lequel est montée une pièce de guidage 22, fixe par rapport au corps 20, et qui reçoit un coin 24 et deux galets 26 et 28 placés de part et d'autre du coin 24. Le galet 26 est susceptible de coopérer avec le fond 30 d'une découpe formée dans la pièce 22. D'une façon similaire le galet 28 est susceptible de coopérer avec le fond 32 d'une pièce de commande 34 montée coulissante dans un alésage 36 formé dans le corps 20. Dans la pièce de commande 34 est formé un alésage 38 dans lequel est monté coulissant un piston de travail 40 susceptible de coopérer avec un élément de friction 42 représenté symboliquement en pointillés. Un dispositif de réglage automatique désigné dans son ensemble par la référence 44 est placé entre le piston 40 et la pièce de commande 34. Plus précisément, une vis 46 à pas réversible est fixée dans le piston 40 et porte un écrou 48 également à pas réversible qui coopère au travers d'une portion en cône 50 formée sur une portion épanouie 52 de l'écrou 48 avec une portion en cône de forme conjuguée 54 formée sur le fond de l'alésage 38 de la pièce de commande 34. Le frottement cône sur cône des portions 50 et 54 forment un dispositif de blocage en rotation de l'écrou 48.

Conformément à l'invention, le moteur de frein comporte un dispositif automatique de positionnement axial relatif entre la pièce de commande et le piston de travail, désigné dans son ensemble par la référence 56. Ce dispositif de positionnement 56 comporte d'une part des moyens internes 58 susceptibles de déplacer sur la gauche le piston 40 en se référant à la figure 1 et formés dans le mode de réalisation représenté par un premier ressort monté précontraint, et d'autre part un deuxième dispositif de blocage désigné dans son ensemble par la référence 60. Ce deuxième dispositif de blocage 60 comporte un anneau de friction 62 monté coulissant sur des rainures droites 64 formées sur le diamètre extérieur de l'écrou 48, l'anneau de friction 62 ayant des languettes qui pénètrent dans les rainures 64 de manière à solidariser en rotation ledit anneau de friction par rapport à l'écrou 48. Le deuxième dispositif de blocage comporte en outre deux pièces placées de part et d'autre de l'anneau de friction 62, une première 66 formée par une tige montée dans un perçage 68 formé dans le fond de la pièce de commande 34, comme on le voit sur la figure 1, la pièce 66 a une longueur telle qu'elle coopère d'une part avec l'anneau de friction 62 et d'autre part avec une partie fixe par rapport au corps 20 et plus précisément avec une paroi frontale 70 de la pièce de guidage 22, la pièce 66 étant susceptible de coulisser dans le perçage 68. La pièce de commande 34 porte également l'autre desdites deux pièces formée par un anneau coulissant 72 immobilisé en rotation par rapport à la pièce de commande 34 au moyen de pattes rabattues 74 pénétrant dans des ouvertures formées dans une rondelle 76 fixe par rapport à la pièce de commande 34 grâce à un jonc 78 placé dans une gorge de la pièce de commande 34. Le jonc 78 est placé de telle manière que lorsque le frein est au repos comme représenté sur la figure 1, il existe un petit jeu entre la pièce 72 et le jonc 78 définissant ainsi ladite course initiale prédéterminée, le jonc 78 formant butée fixe à l'autre pièce 72 lorsque le frein sera mis en œuvre. La portion épanouie 52 de l'écrou 48 est susceptible de coopérer avec la butée fixe 78 au travers de l'anneau 76 au moyen d'une butée à bille 80 formant palier axial. Un second ressort 82 placé entre le corps 20 et un anneau solidaire de la pièce de commande 34 sollicite ladite pièce 34 vers la droite en se référant toujours à la figure 1 en appui sur la paroi frontale 70 fixe par rapport au corps de moteur 20. Le moteur de frein comporte également un dispositif de remise à zéro du réglage automatique désigné dans son ensemble par la référence 84 et formé dans le mode de réalisation représenté par une tige 86 comportant une première extrémité 88 sur laquelle est formée une tête de manœuvre 90 et à son autre extrémité 92 une denture 94 susceptible de coopérer avec une denture 96 formée sur la périphérie de la portion épanouie 52 de l'écrou 48. Un ressort de rappel de tige 98 est placé entre la pièce de guidage 22 et une collerette portée par la tige 86 de manière à dégager les deux dentures l'une de l'autre lorsque la tête de manœuvre 90 n'est pas sollicitée vers la gauche en se référant toujours à la figure 1.

Une vis 100 montée dans le corps 20 porte une projection 102 qui traverse une lumière 104 formée dans la pièce de commande 34 et pénètre dans une rainure 106 formée dans le piston de travail 40 interdisant ainsi au piston et à la pièce de commande tout mouvement de rotation par rapport au corps 20 mais permettant les mouvements de translation dans le sens axial.

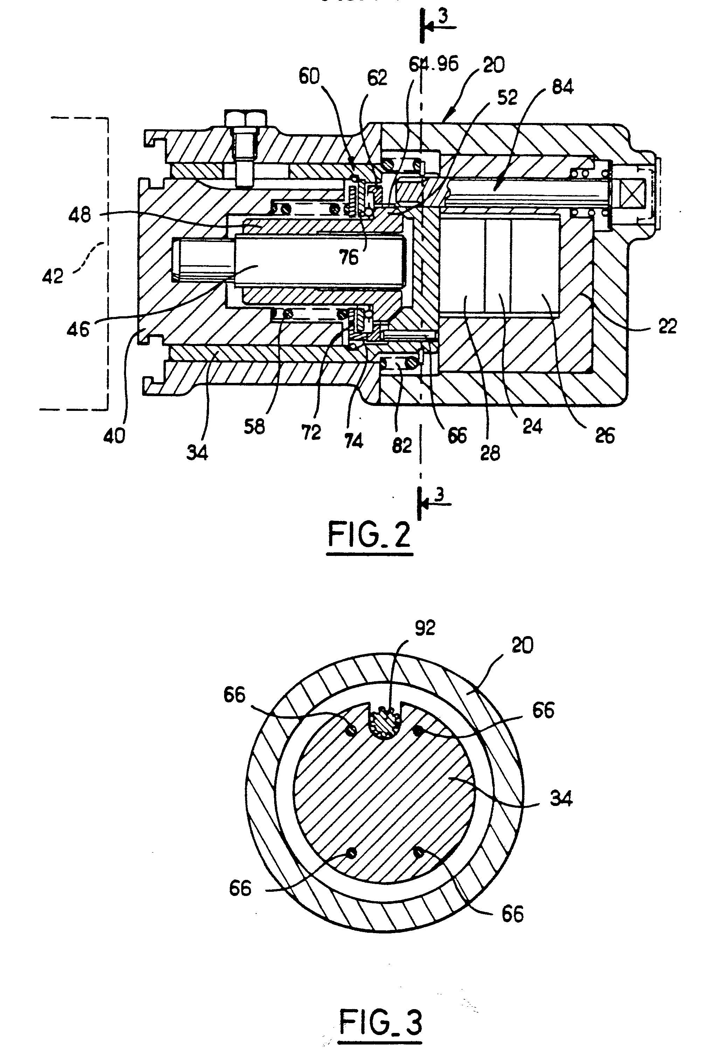

En se reportant à la figure 3, on voit que quatre pièces 66 ont été prévues de manière à solliciter l'anneau de friction 62 en plusieurs points de sa périphérie et éviter que cet anneau ne se mette de travers. Les pièces 66 sont espacées dans le sens haut-bas de la figure 3 de manière à passer de part et d'autre du galet 28 pour pouvoir s'appliquer sur la pièce de guidage 22.

Le frein qui vient d'être décrit à l'aide des figures 1 et 3 fonctionne de la manière suivante :

Au repos, les différents éléments occupent les positions représentées sur la figure 1. Lorsque le moteur de frein est mis en œuvre, c'est-à-dire lorsque le coin 24 est inséré entre les galets 26 et 28 ceux-ci s'écartent en repoussant la pièce de commande 34 vers la gauche de la figure 1 à l'encontre du ressort 82. Pendant ce premier mouvement, le ressort 58 au travers de la pièce 72 et de l'anneau de friction 62 maintient la pièce 66 en appui sur la pièce 22. L'anneau de friction 62 étant toujours serré entre les deux pièces 72 et 66 ne peut tourner et interdit à l'écrou 48 de tourner, écrou qui par sa portion en cône 50 est en appui sur la portion en cône 54 de la pièce de commande 34. Si le mouvement vers la gauche de la pièce de commande 34 est suffisamment faible pour que la pièce 72 ne vienne pas en appui sur le jonc 78 formant butée fixe, au relâchement du frein les pièces reviendront à leur position initiale sans avoir bougé. Lorsque le mouvement vers la gauche de la pièce de commande 34 est tel que la pièce 72 vient en appui sur le jonc 78 l'effort du ressort 58 n'est plus appliqué sur l'anneau de friction 62 et donc celui-ci n'est plus serré entre les deux pièces 72 et 66, dans ce cas, le ressort 58 en repoussant vers la gauche le piston de travail 40 sollicite vers la gauche la vis 46 et l'écrou 48. En tirant vers la gauche l'écrou 48, celui-ci se trouve dégagé de la surface conique 54 de la pièce de commande 34 d'une part, d'autre part il vient en appui sur la butée fixe 76 au travers de la butée à bille 80 et comme l'anneau de friction est libre de tourner par rapport aux deux pièces 72 et 66 le ressort 58 entraîne vers la gauche le piston 40 en dévissant l'écrou 48 au moyen du filetage à pas réversible. Rien ne s'oppose au mouvement vers la gauche du piston 40 sous l'effet du ressort 58 et de l'écrou 48 qui se dévisse si ce n'est le patin 42 qui stoppera le piston 40 après une course plus ou moins importante selon la distance à laquelle se trouvait l'élément de friction 42. Toute progression complémentaire du coin 24 entre les galets 26 et 28 c'est-à-dire toute progression vers la gauche de la pièce de commande 34 entraîne la mise en contact des portions coniques 50 et 54, l'écrou 48 étant alors bloqué en rotation par la friction de ces deux portions coniques. Le serrage du frein peut alors être effectué avec une course faible du coin 24 tous les jeux ayant été rattrapés par le déplacement du piston 40. Au relâchement du frein dans un premier temps tant qu'il existe un effort entre les deux portions coniques, l'écrou ne peut tourner et donc aucun réglage ne peut survenir, dans un deuxième temps si cet effort cesse alors que la pièce 66 n'est pas encore en appui sur la paroi 70 et que la rondelle 72 est toujours en appui sur la butée fixe 78 le dispositif de positionnement peut de nouveau se mettre en œuvre et assurer un réglage correspondant, par exemple, à l'usure des éléments de friction dûe au freinage précédent. Dans un troisième temps la pièce 66 venant au contact de la paroi 70 assure le serrage de l'anneau de friction 62 entre les deux pièces 72 et 66 et toute rotation de l'écou 48 est interdite. Enfin dans un quatrième temps le ressort 82 rappelle la pièce de commande 34 et la pièce 72 retrouve le jeu avec la butée fixe 78, jeu correspondant à la course d'approche prédéterminée ou comme on l'a vu à la course initiale prédéterminée puisque, on vient de le voir, ces deux courses sont identiques, et correspondent au jeu prédéterminé entre la pièce 72 et la butée fixe 78.

On voit donc que le piston 40 grâce au dispositif automatique de positionnement rattrape spontanément tous les jeux existants entre le piston et les éléments de friction sans nécessiter de course importante au coin ou à la pièce de commande 34 et ceci quelle que soit la position relative du piston 40 de la pièce de commande 34 et de l'élément de friction 42.

Sur la figure 2 on a représenté un deuxième mode de réalisation, dans lequel les mêmes éléments remplissant les mêmes fonctions porteront les mêmes références.

Ce mode de réalisation ne diffère du précédent que par une variante de l'agencement du deuxième dispositif de blocage qui seul sera décrit dans ce qui suit, pour le reste de la description se reporter à la description du premier mode de réalisation.

Dans ce deuxième mode de réalisation, l'anneau de friction 62 est porté par la denture formée sur la portion épanouie 52 de l'écrou 48. Cette denture remplit la fonction des rainures droites 64 du premier mode de réalisation et assure également la fonction de la denture 96 du premier mode de réalisation, destinée au dispositif de remise à zéro 84. L'anneau de friction 62 est libre de coulisser axialement sur cette denture 64-96 et elle est placée entre les deux pièces 66, 72 à savoir la tige 66 capable de coulisser dans la pièce de commande 34 et l'autre pièce 72 dont les pattes rabattues 74 servent d'une part à l'immobilisation en rotation de ladite autre pièce 72 par rapport à la pièce de commande 34 par coopération avec des ouvertures formées dans la rondelle 76, ces pattes 74 coopérant également avec l'anneau de friction 62 pour immobiliser celui-ci en rotation comme indiqué dans le premier mode de réalisation. De même, le jeu axial entre l'autre pièce 72 et la rondelle butée fixe 76 définit la course initiale prédéterminée d'une façon similaire au premier mode de réalisation.

En ce qui concerne le fonctionnement de ce deuxième mode de réalisation se reporter à la description du premier mode de réalisation.

On notera cependant que ce mode de réalisation simplifie considérablement la fabrication de l'écrou 48, une seule denture sur la portion épanouie 52 de l'écrou 48 assure la fonction des rainures longitudinales 64 et de la denture 96 précédente.

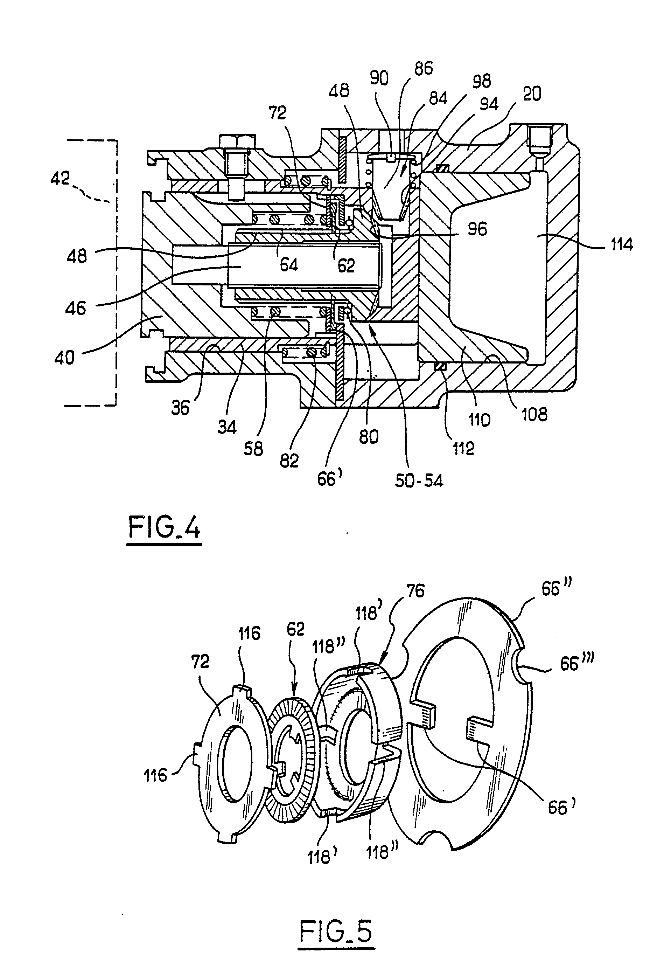

Sur les figures 4 et 5 on a représenté un troisième mode de réalisation qui est une variante du moteur de frein selon l'invention, dans laquelle la commande du moteur de frein au lieu de se faire au moyen d'un coin et de galets, est réalisée au moyen d'une commande purement hydraulique.

De même que pour les deux modes de réalisation précédents, les mêmes pièces remplissant les mêmes fonctions porteront les mêmes références.

Le moteur de frein comporte un corps 20 dans lequel est formé un alésage 108 qui reçoit un piston hydraulique 110 monté de façon étanche dans ledit alésage 108 au moyen d'un joint d'étanchéité conventionnel 112. Le fond du corps 20, l'alésage 108 et le piston 110 définissent une chambre 114 susceptible d'être reliée à une source de pression hydraulique (non représentée) comme par exemple le maître-cylindre du véhicule. Comme dans les modes de réalisation précédents, le corps 20 reçoit également une pièce de commande 34 susceptible de coulisser dans un alésage 36 formé dans ledit corps 20. La pièce de commande reçoit un piston de travail 40 qui porte d'une manière similaire une vis à pas réversible 46 sur laquelle est monté un écrou également à pas réversible 48. L'écrou 48 comporte des rainures longitudinales droites 64 sur lesquelles peut coulisser un anneau de friction 62 mais est solidaire en rotation avec ledit écrou. D'une façon similaire au mode de réalisation précédent, le disque de friction peut être bloqué entre deux pièces, une première 66' formée par deux pattes solidaires d'un anneau 66'' lui-même immobilisé par rapport au corps 20 au moyen de découpes 66''' comme indiqué sur la figure 5 et une autre pièce 72 sollicitée en engagement de friction avec ledit anneau de friction 62 au travers d'un ressort 58. Ladite autre pièce 72 est immobilisée en rotation par rapport à la pièce de commande 34 grâce à des pattes 116 pénétrant dans des encoches 118 formées dans une pièce de butée 76 solidaire de la pièce de commande 34. On notera que la pièce de butée 76 comporte quatre encoches 118, deux peu profondes 118', le fond de ces encoches 118' définissant avec les pattes 116 de la pièce 72 la course d'approche prédéterminée comme indiqué dans les modes de réalisation précédents. En outre la pièce 76 comporte deux autres encoches 118'' profondes et s'étendant sur le voile de la pièce 76 de manière à permettre le passage des deux pattes 66' permettant à celles-ci de coopérer avec l'anneau de friction 62. On notera que dans ce mode de réalisation, l'anneau de friction 62 et les deux pièces 72 et 66' comportent des dentures permettant d'assurer une friction élevée entre les pièces. De même que dans les modes de réalisation précédents, la portion épanouie 52 de l'écrou 48 présente des portions coniques coopérant avec des portions coniques formées sur le fond de la pièce de commande 34 pour former le premier dispositif de blocage 50, 54.

On notera que ce mode de réalisation comporte également un dispositif de remise à zéro 84, il est néanmoins monté perpendiculairement à l'axe du moteur de frein et présente également une tige 86 munie à une de ses extrémités d'une tête de manœuvre 90 formée par une fente de tourne-vis et à son autre extrémité une denture 94 susceptible de coopérer avec une denture 96 lorsque la tige 86 est poussée par le tourne-vis à l'encontre du ressort 98 qui maintient normalement les deux dentures en écartement l'une de l'autre en l'absence de poussée sur la tige 86.

Le fonctionnement de ce troisième mode de réalisation est similaire à celui des deux précédents modes avec néanmoins les différences suivantes :

En se référant à la figure 4, lorsque du liquide sous pression est admis dans la chambre 114 le piston 110 se déplace vers la gauche en déplaçant la pièce de commande 34 également vers la gauche de la figure 4. Lorsque l'amplitude du mouvement vers la gauche dépasse le jeu existant entre les pattes 116 et le fond des encoches 118', la pièce 76 par le fond de ces encoches 118', éloigne également vers la gauche l'autre pièce 72, libérant ainsi la friction existant entre l'anneau de friction 62, l'autre pièce 72 et les pattes 66' de l'anneau 66'' fixe immobilisé par rapport au corps. Le fonctionnement est alors le même que celui décrit précédemment, à savoir le piston 40 est déplacé vers la gauche par le ressort 58 étant donné que la vis 46 exerce une traction sur l'écrou 48 qui n'est plus bloqué par l'anneau de friction 62, ledit écrou 48 peut donc tourner grâce au filetage à pas réversible, la portion épanouie 52 s'appuyant sur la pièce 76 au travers de la butée axiale 80, la traction exercée par le piston 40 sur l'écrou 48 ayant dégagé la friction cône sur cône 50-54. Le reste du fonctionnement est similaire à celui décrit précédemment lorsque l'on remplace les tiges 66 par les languettes 66' de l'anneau 66'', l'anneau 66'' formant ainsi simultanément et la fonction des tiges 66 et la fonction de la paroi frontale 70 portée par la pièce 22 du premier mode de réalisation.

Dans un mode de réalisation non représenté, ce moteur de frein est double avec un piston de travail de chaque côté du moteur de frein et on peut alors utiliser l'invention sur un frein à tambour pour actionner deux segments. Il est évident pour l'homme de l'art que dans ce cas le ressort 58 qui déplace le piston de travail 40 pour rattraper les jeux, doit avoir un effort supérieur à l'effort du ressort de rappel des segments placé entre ceux-ci pour faire revenir les segments à leur position initiale de repos après fin d'application du freinage.

On comprendra également qu'il est possible d'avoir un moteur de frein comportant simultanément une commande hydraulique du type du troisième mode de réalisation et une commande mécanique du type utilisé sur les deux premiers modes de réalisation à condition d'aménager convenablement l'interface entre le piston 110 et la pièce de commande 34 pour interposer la commande mécanique dans une zone ne comportant pas de pression hydraulique.

**Revendications**

1. Moteur de frein à réglage automatique du type comprenant un système vis-écrou à pas réversible (46-48) placé entre un piston de travail (40) et une pièce de commande (34) et susceptible de transmettre un effort axial de ladite pièce de commande (34) audit piston de travail (40) lorsque la rotation relative entre vis (46) et écrou (48) du système vis-écrou (46-48) est bloquée par un dispositif de blocage (50-54), un dispositif automatique de positionnement axial relatif (56) entre ladite pièce de commande (34) et ledit piston de travail (40) assurant une course d'approche prédéterminée entre ledit piston de travail (40) et un élément de friction (42) susceptible d'être sollicité par le moteur de frein, ledit dispositif de positionnement (56) étant mis en œuvre par des moyens internes (58) déplaçant axialement ledit piston de travail (40) par rapport à ladite pièce de commande (34) après une course initiale prédéterminée de ladite pièce de commande (34), les moyens internes (58) ayant mis hors service ledit dispositif de blocage (50-54) si la course d'approche est supérieure à la course d'approche prédéterminée, caractérisé en ce que le dispositif de positionnement (56) comporte un deuxième dispositif de blocage (60) dudit dispositif de positionnement (56) interdisant la mise en œuvre de celui-ci pour toute course de la pièce de commande (34) inférieure à ladite course initiale prédéterminée.

2. Moteur de frein selon la revendication 1, caractérisé en ce que ledit dispositif de positionnement (56) comporte un premier ressort précontraint (58) coopérant axialement d'une part avec ledit piston de travail (40) et d'autre part au travers des deux dispositifs de blocage (50-54, 60) avec ladite pièce de commande (34) et susceptible de les éloigner l'un (40) de l'autre (34) lorsqu'aucun desdits dispositifs de blocage (50-54, 60) n'est opérant.

3. Moteur de frein selon la revendication 2, caractérisé en ce que ledit deuxième dispositif de blocage (60) comporte un anneau de friction (62) lié en rotation avec le système à vis-écrou (46-48) et interdisant la rotation relative entre vis (46) et écrou (48) lorsqu'il est serré entre deux pièces (66, 66', 72) immobilisées en rotation.

4. Moteur de frein selon la revendication 3, caractérisé en ce que l'une (66) de ces deux pièces est montée coulissante dans ladite pièce de commande (34) et dont l'action sur ledit anneau de friction (62) cesse lorsque la course de ladite pièce de commande (34) a dépassé la course initiale prédéterminée, rendant ainsi inopérant ledit deuxième dispositif de blocage (60).

5. Moteur de frein selon l'une des revendications 3 ou 4, caractérisé en ce que l'autre (72) desdites pièces est sollicitée axialement par ledit ressort (58) vers une butée (78-76) fixe par rapport à ladite pièce de commande (34) ou vers ledit anneau de friction (62), le déplacement axial par rapport à la pièce de commande (34) de ladite autre pièce (72) étant stoppé par la coopération avec le premier obstacle rencontré butée (78-76) ou anneau de friction (62).

6. Moteur de frein selon la revendication 5, caractérisé en ce que la vis (46) du système vis-écrou (46-48) est solidaire dudit piston de commande (40) et en ce que ledit écrou (48) présente une portion épanouie (52) susceptible de coopérer soit par une portion en cône (50) avec une portion de forme confuguée (54) portée par ladite pièce de commande (34) soit avec ladite butée fixe (78-76) au travers d'un palier axial (80) selon que l'écrou (48) est sollicité par la pièce de commande (34) ou par la vis (46) du système vis-écrou (46-48).

7. Moteur de frein selon la revendication 6, caractérisé en ce qu'un second ressort (82) sollicite ladite pièce de commande (34) vers une position de repos en appui sur une partie fixe (70, 66") par rapport au corps (20) du moteur de frein sur laquelle vient également en appui l'une (66) des deux pièces, lorsque la pièce de commande (34) est en position de repos assurant ainsi le serrage dudit anneau de friction (62), l'effort axial dudit premier ressort (58) étant inférieur à l'effort axial du deuxième ressort (82).

8. Moteur de frein selon la revendication 7, caractérisé en ce que ladite course initiale prédéterminée est identique à la course d'approche prédéterminée et celles-ci sont définies par le jeu existant entre l'autre (72) desdites pièces et la butée fixe (78-76) lorsque la pièce de commande (34) est en position de repos et que lesdites deux pièces (66, 66', 72) serrent ledit anneau de friction (62).

9. Moteur de frein selon l'une des revendications 6 à 8, caractérisé en ce que ledit moteur de frein comporte un dispositif de remise à zéro (84) formé par une tige (86) comportant à une extrémité (88) une tête de manœuvre (90) et à l'autre extrémité (92) une denture (94) susceptible de coopérer avec une denture (96) formée sur la portion épanouie (52) dudit écrou (48) si une poussée est exercée, sur la tête de manœuvre (90), supérieure à l'effort d'un ressort de rappel de tige (98).

10. Moteur de frein selon l'une des revendications précédentes, caractérisé en ce que le piston de travail (40) et la pièce de commande (34) sont immobilisés en rotation par rapport au corps (20) du moteur de frein au moyen d'une vis (100) pénétrant dans des rainures (106) ou lumières (104) formées sur le piston (40) et sur la pièce de commande (34).

11. Moteur de frein selon l'une des revendications précédentes, caractérisé en ce que la mise

en œuvre du moteur de frein est assurée par un coin (24) introduit entre deux galets (26-28) dont l'un (28) coopère avec ladite pièce de commande (34) et l'autre (26) coopère avec une pièce (22) fixe par rapport au corps (20) du moteur de frein.

12. Moteur de frein selon l'une des revendications 1 à 10, caractérisé en ce que la mise en œuvre du moteur de frein est assurée par un piston (110) susceptible d'être soumis à une pression hydraulique régnant dans une chambre (114) formée entre le corps (20) et le piston (110).

**Claims**

1. Brake actuator with automatic adjustment of the type incorporating a screw and nut system with reversible pitch (46-48) situated between a working piston (40) and a control component (34) and capable of transmitting an axial force from the said control component (34) to the said working piston (40) when the relative rotation between the screw (46) and the nut (48) of the screw and nut sytem (46-48) is locked by a locking device (50-54), an automatic relative axial positioning device (56) between the said control component (34) and the said working piston (40), providing a predetermined approach travel between the said working piston (40) and a friction component (42) capable of being pushed by the brake actuator, the said positioning device (56) being brought into operation by internal means (58) which move axially the said working piston (40) relative to the said control component (34) after an initial predetermined travel of the said control component (34), the internal means (58) having stopped the said locking device (50-54) when the approach travel is greater than the predetermined approach travel, characterized in that the positioning device (56) incorporates a second locking device (60) of the said positioning device (56) which prevents the latter from being brought into operation for any travel of the control component (30) which is less than the said initial predetermined travel.

2. Brake actuator according to Claim 1, characterized in that the said positioning device (56) incorporates a first spring in a stressed condition (58) co-operating axially, firstly, with the said working piston (40) and secondly, through the two locking devices (50-54, 60), with the said control component (34), and which is capable of separating them one (40) from the other (34) when neither of the said locking devices (50-54, 60) is operative.

3. Brake actuator according to Claim 2, characterized in that the said second locking device (60) incorporates a friction ring (62) joined in rotation with the screw and nut system (46-48) and preventing relative rotation between the screw (46) and the nut (48) when it is clamped between two components (66, 66', 72) which are immobilized in rotation.

4. Brake actuator according to Claim 3, characterized in that one (66) of these two components is mounted so as to slide in the said control component (34) and whose action on the said friction ring (62) ceases when the travel of the said control component (34) has exceeded the predetermined initial travel, thus making the said second locking device (60) inoperative.

5. Brake actuator according to one of Claims 3 or 4, characterized in that the other (72) of the said components is pushed axially by the said spring (58) towards an abutment (78-76) which is fixed relative to the said control component (34) or towards the said friction ring (62), the axial displacement of the said other component (72) relative to the control component (34) being halted by co-operation with the first obstacle encountered, either the abutment (78-76) or the friction ring (62).

6. Brake actuator according to Claim 5, characterized in that the screw (46) of the screw and nut system (46-48) is firmly fixed to the said control (sic) piston (40), and in that the said nut (48) has an enlarged portion (52) capable of co-operation either by means of a conical portion (50) with a portion of complementary shape (54) carried by the said control component (34), or with the said fixed abutment (78-76) through an axial thrust bearing (80), and the nut (48) is pushed accordingly either by the control component (34) or by the screw (46) of the screw and nut system (46-48).

7. Brake actuator according to Claim 6, characterized in that a second spring (82) pushes the said control component (34) towards a rest position bearing against a portion (70, 66") which is fixed relative to the body (20) of the brake actuator, against which one (66) of the two components also comes to bear, when the control component (34) is in the rest position, thus providing the clamping of the said friction ring (62), the axial force of the said first spring (58) being smaller than the axial force of the second spring (82).

8. Brake actuator according to Claim 7, characterized in that the said predetermined initial travel is identical to the predetermined approach travel and the latter are defined by the clearance existing between the other (72) of the said components and the fixed abutment (78-76) when the control component (34) is in the rest position and the said two components (66, 66', 72) clamp the said friction ring (62).

9. Brake actuator according to one of Claims 6 to 8, characterized in that the said brake actuator incorporates a device for resetting to zero (84) formed by a rod (86) incorporating at one end (88) a driving head (90) and at the other end (92) a set of teeth (94) capable of co-operating with a set of teeth (96) formed on the enlarged portion (52) of the said nut (48) if a pressure is exerted on the driving head (90) which is greater than the force of a return spring (98) for the rod.

10. Brake actuator according to one of the previous claims, characterized in that the working piston (40) and the control component (34) are immobilized in rotation relative to the body (20) of the brake actuator by means of a screw (100) entering into grooves (106) or slots (104) formed in the piston (40) and in the control component (34).

11. Brake actuator according to one of the previous claims, characterized in that the brake actuator is put into operation by a wedge (24) introduced between two rollers (26-28) of which one (28) co-operates with the said control component (34) and the other (26) co-operates with a component (22) which is fixed relative to the body (20) of the brake actuator.

12. Brake actuator according to one of Claims 1 to 10, characterized in that the brake actuator is put into operation by a piston (110) capable of being subjected to a hydraulic pressure existing in a chamber (114) formed between the body (20) and the piston (110).

**Patentansprüche**

1. Bremsmotor mit selbsttätiger Nachstellung, mit einem Einweg-Spindelmechanismus (46-48), der zwischen einen Arbeitskolben (40) und ein Steuerglied (34) eingesetzt ist und dazu dient, eine Axialkraft des Steuergliedes (34) auf den Arbeitskolben (40) zu übertragen, wenn die Relativdrehung zwischen der Spindel (46) und der Mutter (48) des Spindelmechanismus (46-48) durch eine Sperrvorrichtung (50-54) gesperrt ist, wobei eine selbsttätige Positionierungsvorrichtung (56) zur axialen Positionierung zwischen dem Steuerglied (34) und dem Arbeitskolben (40) einen vorgegebenen Zustellweg zwischen dem Arbeitskolben (40) und einem durch den Bremsmotor beaufschlagbaren Reibglied (42) sicherstellt, wobei die Positionierungsvorrichtung (56) durch interne Mittel (58) in Betrieb setzbar ist, die den Arbeitskolben (40) bezüglich des Steuergliedes (34) nach einem vorgegebenen Anfangsweg des Steuergliedes (34) verschieben, wobei die internen Mittel (58) die Sperrvorrichtung (50-54) außer Betrieb setzen, wenn der Zustellweg größer als der vorgegebene Zustellweg ist, dadurch gekennzeichnet, daß die Positionierungsvorrichtung (56) eine zweite Sperrvorrichtung (60) für die Positioniervorrichtung (56) aufweist, die ein Inbetriebsetzen derselben während des gesamten Weges des Steuergliedes (34), der kleiner ist als der vorgegebene Anfangsweg, unterbindet.

2. Bremsmotor nach Anspruch 1, dadurch gekennzeichnet, daß die Positionierungsvorrichtung (56) eine erste vorgespannte Feder (58) aufweist, die axial einerseits mit dem Arbeitskolben (40) und andererseits über die beiden Sperrvorrichtungen (50-54, 60) mit dem Steuerglied (34) zusammenwirkt und dazu dient, den einen (40) vom anderen (34) zu entfernen, wenn keine der Sperrvorrichtungen (50-54, 60) in Betrieb ist.

3. Bremsmotor nach Anspruch 2, dadurch gekennzeichnet, daß die zweite Sperrvorrichtung (60) einen Reibring (62) aufweist, der mit dem Spindelmechanismus (46-48) drehfest verbunden ist und eine Relativdrehung zwischen der Spindel (46) und der Mutter (48) verhindert, wenn er zwischen zwei drehfest angeordneten Bauteilen (66, 66', 72) eingeklemmt ist.

4. Bremsmotor nach Anspruch 3, dadurch gekennzeichnet, daß das eine (66) der beiden Bauteile in dem Steuerglied (34) gleitend gelagert ist und seine Einwirkung auf den Reibring (62) aufhört, wenn der Weg des Steuergliedes (34) den vorgegebenen Anfangsweg überschritten hat, wodurch die zweite Sperrvorrichtung (60) außer Betrieb gesetzt wird.

5. Bremsmotor nach einem der Ansprüche 3 oder 4, dadurch gekennzeichnet, daß das andere (72) der Bauteile durch die Feder (58) axial gegen einen bezüglich des Steuergliedes (34) festgelegten Anschlag (78-76) oder gegen den Reibring (62) angedrückt wird, wobei die Axialverschiebung des anderen Bauteiles (72) bezüglich des Steuergliedes (34) durch Zusammenwirken mit dem ersten angetroffenen Hindernis in Form des Anschlags (78-76) oder Reibringes (62) beendet wird.

6. Bremsmotor nach Anspruch 5, dadurch gekennzeichnet, daß die Spindel (46) des Spindelmechanismus (46-48) einteilig mit dem Arbeitskolben (40) ausgebildet ist und daß die Mutter (48) einen Erweiterungsabschnitt (52) aufweist, der dazu dient, über einen konusförmigen Abschnitt (50) mit einem von dem Steuerglied (34) getragenen Abschnitt (54) entsprechender Form oder mit dem ortsfesten Anschlag (78-76) über ein Axiallager (80) zusammenzuwirken, solange die Mutter (48) durch das Steuerglied (34) oder die Spindel (46) des Spindelmechanismus (46-48) vorgespannt wird.

7. Bremsmotor nach Anspruch 6, dadurch gekennzeichnet, daß eine zweite Feder (82) das Steuerglied (34) in Richtung auf seine Ruhestellung gegen einen bezüglich des Gehäuses (20) des Bremsmotors festgelegten Abschnitt (70, 66") drückt, gegen den in gleicher Weise das eine (66) der beiden Bauteile anliegt, wenn sich das Steuerglied (34) in der Ruhestellung befindet, wodurch das Festklemmen des Reibringes (62) sichergestellt wird, wobei die Axialkraft der ersten Feder (58) kleiner ist als die Axialkraft der zweiten Feder (82).

8. Bremsmotor nach Anspruch 7, dadurch gekennzeichnet, daß der vorgegebene Anfangsweg identisch ist mit dem vorgegebenen Zustellweg und diese durch das Spiel definiert sind, das zwischen dem anderen (72) der Bauteile und dem ortsfesten Anschlag (78-76) vorhanden ist, wenn das Steuerglied (34) die Ruhestellung einnimmt und die beiden Bauteile (66, 66', 72) den Reibring (62) festklemmen.

9. Bremsmotor nach einem der Ansprüche 6 bis 8, dadurch gekennzeichnet, daß der Bremsmotor eine Rückstellvorrichtung (84) aufweist, die von einer Stange (86) gebildet wird, welche an einem Ende (88) einen Betätigungskopf (90) und am anderen Ende (92) eine Verzahnung (94) aufweist, die mit einer am Erweiterungsabschnitt (52) der Mutter (48) gebildeten Verzahnung (96) zusammenwirkt, wenn auf den Betätigungskopf (90) eine Schubkraft ausgeübt wird, die größer ist als die Kraft einer Stangenrückholfeder (98).

10. Bremsmotor nach einem der vorhergehenden Ansprüche, dadurch gekennzeichnet, daß der Arbeitskolben (40) und das Steuerglied (34) gegen eine Drehung bezüglich des Gehäuses (20) des Bremsmotors mit Hilfe einer Schraube (100) gesichert sind, die in Nuten (106) oder Schlitze (104) eindringt, welche am Kolben (40) oder am Steuerglied (34) gebildet sind.

11. Bremsmotor nach einem der vorhergehenden Ansprüche, dadurch gekennzeichnet, daß das Inbetriebsetzen des Bremsmotors durch einen Keil (24) sichergestellt wird, der zwischen zwei Rollen (26-28) eingesetzt ist, von denen die eine (28) mit dem Steuerglied (34) und die anderen (26) mit einem bezüglich des Gehäuses (20) des Bremsmotors festgelegten Bauteils (22) zusammenwirkt.

12. Bremsmotor nach einem der Ansprüche 1 bis 10, dadurch gekennzeichnet, daß das Inbetriebsetzen des Bremsmotors durch einen Kolben (110) sichergestellt wird, der einem Hydraulikdruck aussetzbar ist, der in einer Kammer (114) zwischen dem Gehäuse (20) und dem Kolben (110) herrscht.

FIG.1

1

FIG. 2

FIG. 3

2

FIG.4

FIG.5